(19) **Europäisches Patentamt / European Patent Office / Office européen des brevets**

(11) **EP 4 482 718 B1**

(12) **EUROPEAN PATENT SPECIFICATION**

(45) Date of publication and mention
of the grant of the patent:
**14.01.2026 Bulletin 2026/03**

(21) Application number: **22707728.6**

(22) Date of filing: **24.02.2022**

(51) International Patent Classification (IPC):
**B60T 8/17** *(2006.01)* **G01S 11/02** *(2010.01)*

(52) Cooperative Patent Classification (CPC):
**B60T 8/1708; B60T 8/17616; G01S 11/02**

(86) International application number:
**PCT/EP2022/054624**

(87) International publication number:
**WO 2023/160788 (31.08.2023 Gazette 2023/35)**

(54) **SYSTEMS FOR DETERMINING VEHICLE SPEED OVER GROUND**

SYSTEME ZUR BESTIMMUNG DER FAHRZEUGGESCHWINDIGKEIT ÜBER DEM BODEN

SYSTÈMES POUR DÉTERMINER LA VITESSE D'UN VÉHICULE AU SOL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.01.2025 Bulletin 2025/01**

(73) Proprietor: **VOLVO TRUCK CORPORATION
405 08 Göteborg (SE)**

(72) Inventor: **RYDSTRÖM, Mats
427 39 Billdal (SE)**

(74) Representative: **Ström & Gulliksson AB
P.O. Box 4188
203 13 Malmö (SE)**

(56) References cited:
**DE-A1- 102004 029 002     DE-A1- 102010 030 629
JP-A- 2003 231 460     JP-A- 2006 103 495
US-B2- 10 974 705**

• **BJORSELL JOACHIM ET AL: "Predictor
antennas in action", 2017 IEEE 28TH ANNUAL
INTERNATIONAL SYMPOSIUM ON PERSONAL,
INDOOR, AND MOBILE RADIO
COMMUNICATIONS (PIMRC), IEEE, 8 October
2017 (2017-10-08), pages 1 - 7, XP033321130,
ISBN: 978-1-5386-3529-2, [retrieved on
20180214], DOI: 10.1109/PIMRC.2017.8292235**

Processed by Luminess, 75001 PARIS (FR)

**Description**

TECHNICAL FIELD

The present disclosure relates to methods and control units for ensuring safe and efficient vehicle motion management of a heavy-duty vehicle. The methods are particularly suitable for use with cargo transporting vehicles, such as trucks and semi-trailers. The invention can however also be applied in other types of heavy-duty vehicles, e.g., in construction equipment and in mining vehicles, as well as in cars.

BACKGROUND

Heavy-duty vehicles have traditionally been controlled using torque request signals determined based on the position of an accelerator or brake pedal and sent to motion support devices (MSDs) such as service brakes and propulsion devices over digital interfaces. However, advantages may be obtained by instead controlling the actuators using wheel slip or wheel speed requests sent from a central vehicle controller to the different actuators. This moves the actuator control closer to the wheel end, and therefore allows for a reduced latency and a faster more accurate control of the MSDs. Wheel-slip based MSD control approaches are particularly suitable for use with wheel-end electrical machines in a battery or fuel cell powered heavy-duty vehicle, which axle speeds can be accurately controlled at high bandwidth. Wheel-slip based vehicle motion management and its associated advantages are discussed, e.g., in WO 2017/215751 and also in WO 2021/144010.

Wheel slip or wheel speed-based control of heavy-duty vehicles relies on accurate knowledge of the vehicle speed over ground as well as the rotation speed of the wheel, since these two quantities together determine the wheel slip. The rotation speed of the wheel can be reliably obtained from sensors such as Hall effect sensors or rotary encoders. However, the vehicle speed over ground may be more difficult to obtain robustly and in a cost efficient manner, at least in some environments. A global positioning system (GPS) receiver is able to determine vehicle speed over ground, but satellite systems are prone to error in environments with strong multipath radio propagation and of course require a clear view of the sky, which is not always available. Advanced radar systems and vision-based sensor can also be used to determine vehicle speed over ground, but these sensors may be costly and may also be prone to error due to, e.g., sun glare and interference.

DE 102004029002 A1 discloses a system for measuring wheel slip comprising a radar sensor.

JP 2003231460 A discloses a radar sensor for measuring the velocity of a vehicle.

There is a need for reliable methods of determining vehicle speed over ground suitable for use in heavy-duty vehicles controlled based on wheel slip.

SUMMARY

It is an object of the present disclosure to at least partially overcome the above-described deficiencies, and to provide improved methods for determining the speed over ground of a heavy-duty vehicle. The object is obtained by a system for determining a wheel slip of a wheel on a heavy-duty vehicle according to claim 1. The system comprises at least two antenna elements separated by a distance, a first processing unit arranged to receive a radio signal via the at least two antenna elements, to correlate the received radio signal from the antenna elements against each other and to determine a speed over ground of the vehicle based on the correlation of the received radio signal at the antenna elements. The system further comprises a wheel speed sensor arranged to determine a rotational velocity of the wheel, and a second processing unit arranged to determine the wheel slip of the wheel based on the rotational velocity of the wheel and on the speed over ground of the vehicle.

Thus, a reliable method for determining vehicle and/or wheel speed over ground is obtained. The method does not rely on wheel speed sensors nor on GPS systems, radar-based sensors or vision-based sensors. It is a further advantage that the method uses a new type of technique for determining vehicle and/or wheel speed over ground, since it increases reliability of existing speed determination methods, and can be used as a redundant system.

The system can be used to determine both longitudinal and lateral speed over ground, which is a further advantage.

According to some aspects, the system comprises a plurality of groups of at least two antenna elements each, where the groups are distributed over the heavy-duty vehicle. This allows a central controller to determine speed over ground at more than one place on the vehicle and thus to determine yaw motion and other important vehicle motion parameters.

The first processing unit can be arranged to receive a 3GPP radio signal, such as a fourth, 4G, fifth, 5G, or sixth, 6G, generation cellular access radio signal. Alternatively or in combination, a Wi-Fi radio signal comprised in the family of wireless network protocols based on the **IEEE** 802.11 family of standards and/or a proprietary beacon radio signal can be used.

The at least two antenna elements separated by the distance are optionally arranged to be mounted on a cab roof of the heavy-duty vehicle, where they often have good reception conditions and similar near-field antenna behaviors. The antenna elements can also be integrated into a roof hatch of the cab on the heavy-duty vehicle.

The techniques disclosed herein can also be used to determine lateral vehicle and/or wheel speed, independently of the wheel slip determination, which finds applications in numerous heavy-duty vehicle control methods.

According to some aspects, the accuracy of the estimated speed over ground is also determined, based on a curvature of the correlation function of the radio signals at the different antenna elements.

There is also disclosed herein control units, vehicles, computer programs, computer readable media, and computer program products associated with the above discussed advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present invention will become apparent when studying the appended claims and the following description. The skilled person realizes that different features of the present invention may be combined accordance with the appended claims.

BRIEF DESCRIPTION OF THE DRAWINGS

The above, as well as additional objects, features and advantages, will be better understood through the following illustrative and non-limiting detailed description of exemplary embodiments, wherein:

Figure 1    illustrates an example heavy-duty vehicle;
Figure 2    is a graph showing example tyre forces as function of wheel slip;
Figure 3    shows an example motion support device control arrangement;
Figure 4A   illustrates an example predictor antenna arrangement;
Figure 4B   illustrates another example predictor antenna arrangement;
Figure 5    illustrates an example vehicle control function architecture;
Figure 6    illustrates an example heavy-duty vehicle;
Figure 7    is a flow chart illustrating methods;
Figure 8    schematically illustrates a control unit; and
Figure 9    shows an example computer program product.

DETAILED DESCRIPTION

The present disclosure will now be described more fully hereinafter with reference to the accompanying drawings, in which exemplary embodiments are shown. The disclosure may, however, be embodied in many different forms and should not be construed as limited to the embodiments set forth herein; rather, these embodiments are provided for thoroughness and completeness. Like reference character refer to like elements throughout the description.

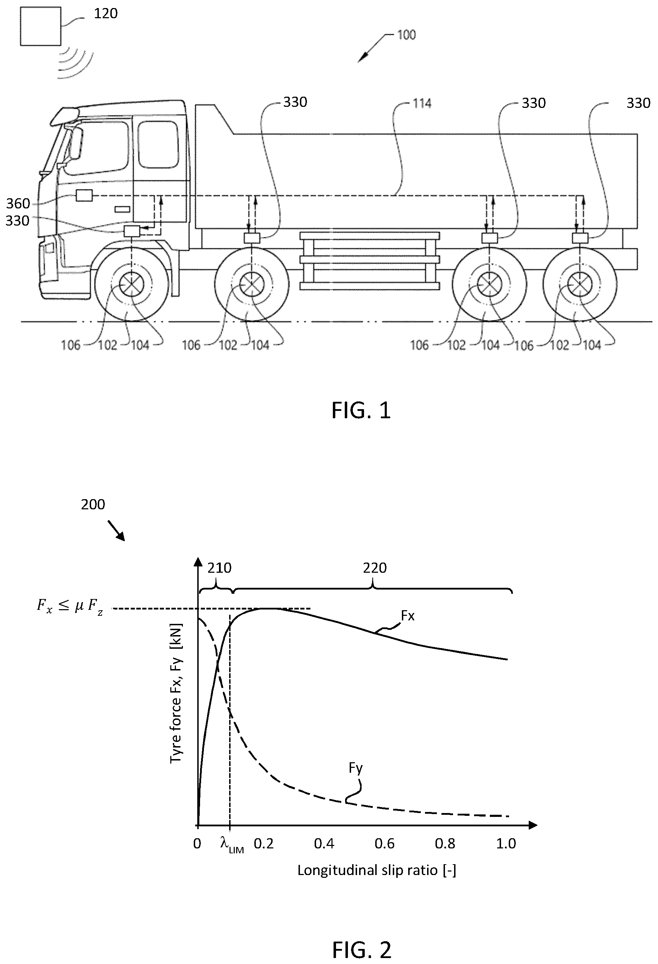

Figure 1 illustrates an example heavy-duty vehicle 100, here in the form of a truck. The vehicle comprises a plurality of wheels 102, wherein at least a subset of the wheels 102 comprises a respective motion support device (MSD) 104. Although the embodiment depicted in Figure 1 illustrates an MSD for each of the wheels 102, it should be readily understood that e.g., one pair of wheels 102 may be arranged without such an MSD 104. Also, an MSD may be arranged connected to more than one wheel, e.g., via a differential arrangement.

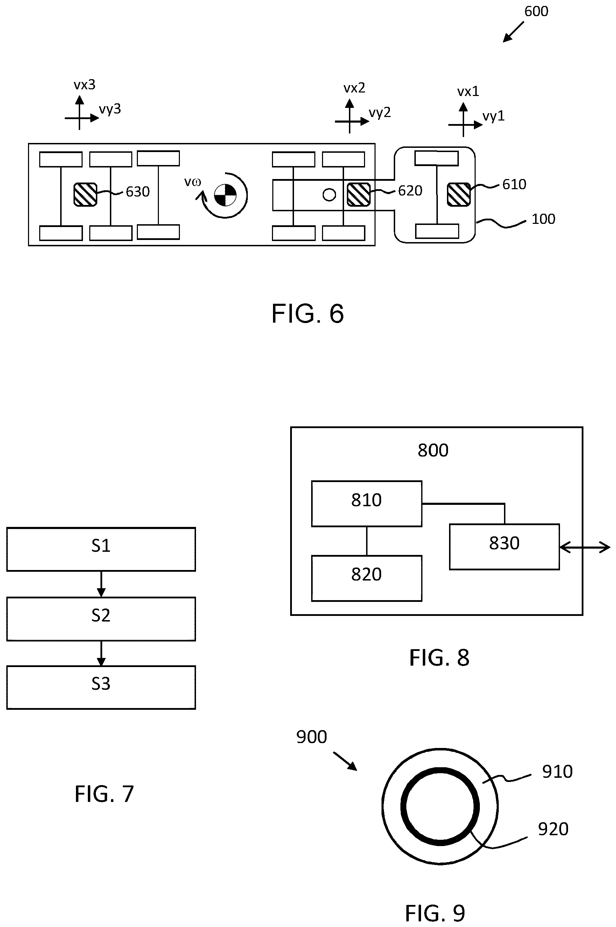

It is appreciated that the herein disclosed methods and control units can be applied with advantage also in other types of heavy-duty vehicles, such as trucks with drawbar connections, construction equipment, buses, and the like. The vehicle 100 may also comprise more than two vehicle units, i.e., a dolly vehicle unit may be used to tow more than one trailer. Some aspects of the herein proposed techniques are particularly suitable for articulated vehicles such as semi-trailers, as will be discussed in more detail below in connection to Figure 6.

The MSDs 104 may be arranged for generating a torque on a respective wheel of the vehicle or for both wheels of an axle. The MSD may be a propulsion device, such as an electric machine 106 arranged to e.g., provide a longitudinal wheel force to the wheel(s) of the vehicle 100. Such an electric machine may thus be adapted to generate a propulsion torque as well as to be arranged in a regenerative braking mode for electrically charging a battery (not shown) or other energy storage system(s) of the vehicle 100. Electric machines may also generate braking torque without storing energy. For instance, brake resistors and the like may be used to dissipate the excess energy from the electric machines during braking.

The MSDs 104 may also comprise friction brakes such as disc brakes or drum brakes arranged to generate a braking torque by the wheel 102 in order to decelerate the vehicle. Herein, the term acceleration is to be construed broadly to encompass both positive acceleration (propulsion) and negative acceleration (braking).

The methods disclosed herein primarily relate to controlling propulsion of heavy-duty vehicles, i.e., acceleration. However, the disclosed methods may also find use in decelerating heavy-duty vehicles, i.e., during braking maneuvers.

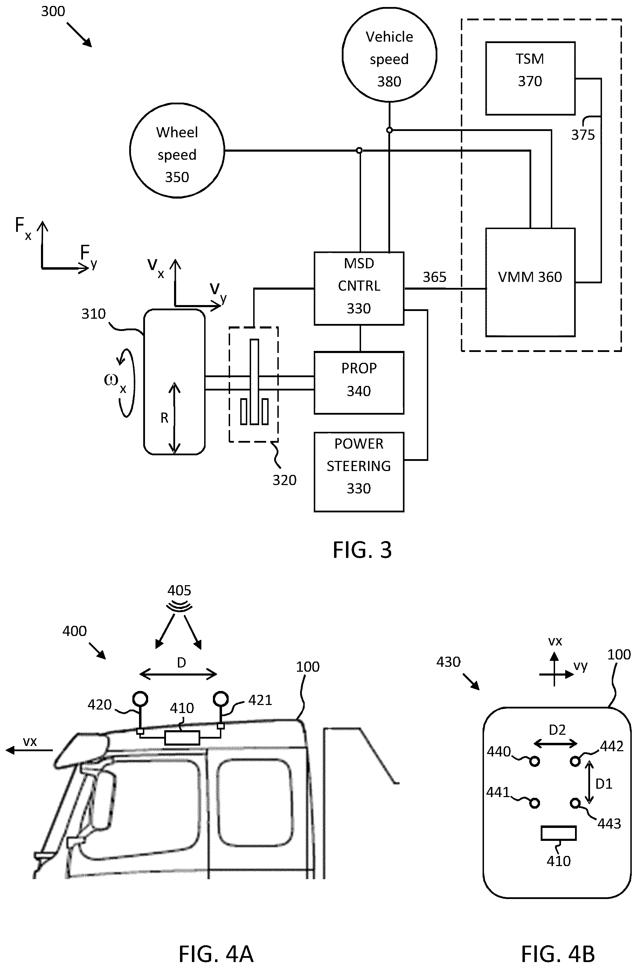

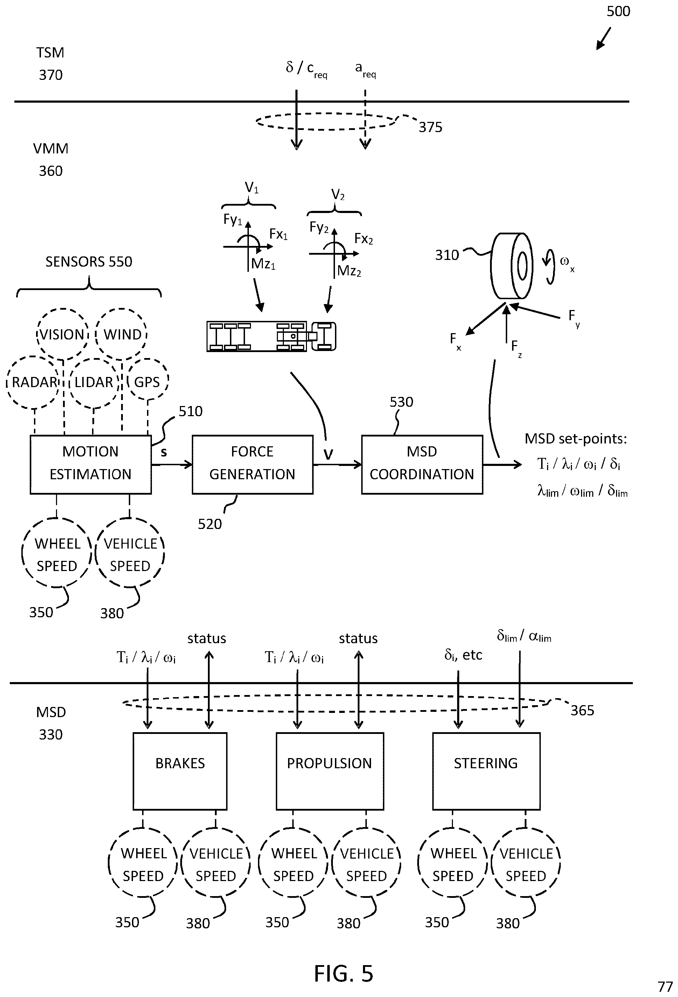

Moreover, each of the MSDs 104 is connected to a respective MSD control system or control unit 330 arranged for controlling operation of the MSD 104. The MSD control system 330 is preferably a decentralized motion support system 330, although centralized implementations are also possible. It is furthermore appreciated that some parts of the MSD control system may be implemented on processing circuitry remote from the vehicle, such as on a remote server 120 accessible from the vehicle via wireless link. Still further, each MSD control system 330 is connected to a vehicle motion management (VMM) system or function 360 of the vehicle 100 via a data bus communication arrangement 114 that can be either wired, wireless or both wired and wireless. Hereby, control signals can be transmitted between the vehicle motion management system 360 and the MSD control system 330. The vehicle motion management system 360 and the MSD control system 330 will be described in further detail below with reference to Figure 3 and Figure 5.

The VMM system 360 as well as the MSD control system 330 may include a microprocessor, microcontroller, programmable digital signal processor or another programmable device. The systems may also, or instead, include an application specific integrated circuit, a programmable gate array or programmable array logic, a programmable logic device, or a digital signal processor. Where the system(s) include(s) a programmable device such as the microprocessor, microcontroller or programmable digital signal processor mentioned above, the processor may further include computer executable code that controls operation of the programmable device. Implementation aspects of the different vehicle unit processing circuits will be discussed in more detail below in connection to Figure 8.

Generally, the MSDs on the vehicle 100 may also be realized as, e.g., a power steering device, active suspension devices, and the like. Although these types of MSDs cannot be used to directly generate longitudinal force to accelerate or brake the vehicle, they are still part of the overall vehicle motion management of the heavy-duty vehicle and may therefore form part of the herein disclosed methods for vehicle motion management. Notably, the MSDs of the heavy-duty vehicle 100 are often coordinated in order to obtain a desired motion by the vehicle. For instance, two or more MSDs may be used jointly to generate a desired propulsion torque or braking torque, a desired yaw motion by the vehicle, or some other dynamic behavior.

Longitudinal wheel slip $\lambda_x$ may, in accordance with SAE J370 (SAE Vehicle Dynamics Standards Committee January 24, 2008) be defined as

$$\lambda_x = \frac{R\omega_x - v_x}{max(|R\omega_x|, |v_x|)}$$

where R is an effective wheel radius in meters, $\omega_x$ is the angular velocity of the wheel, and $v_x$ is the longitudinal speed of the wheel (in the coordinate system of the wheel). Thus, $\lambda_x$ is bounded between -1 and 1 and quantifies how much the wheel is slipping with respect to the road surface. Wheel slip is, in essence, a speed difference measured between the wheel and the vehicle. Thus, the herein disclosed techniques can be adapted for use with any type of wheel slip definition. It is also appreciated that a wheel slip value is equivalent to a wheel speed value given a velocity of the wheel over the surface, in the coordinate system of the wheel. The VMM 360 and optionally also the MSD control system 330 maintains information on $v_x$ in the reference frame of the wheel, while a wheel speed sensor or the like can be used to determine $\omega_x$ (the rotational velocity of the wheel).

Slip angle or sideslip angle $\alpha$ is the angle between the direction in which a wheel is pointing and the direction in which it is actually traveling (i.e., the angle between the longitudinal velocity component $v_x$ and the vector sum of wheel forward velocity $v_x$ and lateral velocity $v_y$. This slip angle results in a force, the cornering force, which is in the plane of the contact patch and perpendicular to the intersection of the contact patch and the midplane of the wheel. The cornering force increases approximately linearly for the first few degrees of slip angle, then increases non-linearly to a maximum before beginning to decrease.

The slip angle, $\alpha$ is often defined as

$$\alpha = \arctan\left(\frac{v_y}{|v_x|}\right)$$

where $v_y$ is the lateral speed of the wheel in the coordinate system of the wheel.

Herein, longitudinal speed over ground may be determined relative to the vehicle, in which case the speed direction refers to the forward direction of the vehicle or relative to a wheel, in which case the speed direction refers to the forward direction of the wheel. The same is true for lateral speed over ground, which can be either a lateral speed of the vehicle or a lateral speed over ground of a wheel. The meaning will be clear from context, and it is appreciated that a conversion can be applied in order to translate speed over ground between the coordinate system of the vehicle and the coordinate system of the wheel, and vice versa. Vehicle and wheel coordinate systems are discussed, e.g., by Thomas Gillespie in "Fundamentals of Vehicle Dynamics" Warrendale, PA: Society of Automotive Engineers, 1992.

In order for a wheel (or tyre) to produce a wheel force which affects the motion state of the heavy-duty vehicle, such as an acceleration, slip must occur. For smaller slip values the relationship between slip and generated force is approximately linear, where the proportionality constant is often denoted as the slip stiffness $C_x$ of the tyre. A tyre is subject to a longitudinal force $F_x$, a lateral force $F_y$, and a normal force $F_z$. The normal force $F_z$ is key to determining some important vehicle properties. For instance, the normal force to a large extent determines the achievable longitudinal tyre force $F_x$ by the wheel since, normally, $F_x \leq \mu F_z$, where $\mu$ is a friction coefficient associated with a road friction condition. The maximum available lateral force for a given wheel slip can be described by the so-called Magic Formula as described in "Tyre and vehicle dynamics", Elsevier Ltd. 2012, ISBN 978-0-08-097016-5, by Hans Pacejka, where wheel slip and tyre force is also discussed in detail.

Figure 2 is a graph showing an example 200 of achievable tyre forces as function of longitudinal wheel slip. Fx is the longitudinal tyre force while Fy is the maximum obtainable lateral wheel force for a given wheel slip. This type of relationship between wheel slip and generated tyre force is often referred to as an inverse tyre model, and it is generally known. The examples in Figure 2 are for positive wheel forces, i.e., acceleration. Similar relationships exist between wheel slip and negative wheel force, i.e., braking.

An inverse tyre model can be used to translate between a desired longitudinal tyre force $F_x$ and longitudinal wheel slip $\lambda_x$. The interface between VMM and MSDs capable of delivering torque to the vehicle's wheels has as mentioned above traditionally been focused on torque-based requests to each MSD from the VMM without any consideration towards wheel slip. However, this approach has some performance limitations. In case a safety critical or excessive slip situation arises, then a relevant safety function (traction control, anti-lock brakes, etc.) operated on a separate control unit normally steps in and requests a torque override in order to bring the slip back into control. The problem with this approach is that since the primary control of the actuator and the slip control of the actuator are allocated to different electronic control units (ECUs), the latencies involved in the communication between them significantly limits the slip control performance. Moreover, the related actuator and slip assumptions made in the two ECUs that are used to achieve the actual slip control can be inconsistent and this in turn can lead to sub-optimal performance. Significant benefits can be achieved by instead using a wheel speed or wheel slip-based request on the interface between VMM 360 and the MSD controller or controllers 330, thereby shifting the difficult actuator speed control loop to the MSD controllers, which generally operate with a much shorter sample time compared to that of the VMM function. Such an architecture can provide much better disturbance rejection compared to a torque-based control interface and thus improves the predictability of the forces generated at the tyre road contact patch.

Referring again to Figure 2, the example longitudinal tyre force Fx shows an almost linearly increasing part 210 for small wheel slips, followed by a part 220 with more non-linear behavior for larger wheel slips. It is desirable to maintain vehicle operation in the linear region 210, where the obtainable longitudinal force in response to an applied brake command is easier to predict, and where enough lateral tyre force can be generated if needed. To ensure operation in this region, a wheel slip limit $\lambda_{lim}$ on the order of, e.g., 0.1 or so, can be imposed on a given wheel.

A problem encountered when using wheel slip to actively control one or more wheels on a heavy-duty vehicle, such as the vehicle 100, and also when executing more low complex control such as imposing a wheel slip limit $\lambda_{lim}$, is that the speed over ground $v_x$ of the wheel (and of the vehicle) may not be accurately known. For instance, if wheel speed sensors such as Hall effect sensors or rotational encoders are used to determine vehicle speed over ground, then the vehicle speed over ground will be erroneously determined in case the wheels used for estimating the speed over ground are themselves slipping. Also, vehicle speed over ground determined based on wheel rotation is one-dimensional, i.e., the method does not allow determining a wheel lateral speed over ground $v_y$ in addition to the longitudinal speed over ground $v_x$, i.e., a speed vector in two dimensions.

Satellite based positioning systems can be used to determine the speed over ground of a heavy-duty vehicle 100 and of any given wheel on the vehicle 100. However, these systems do not function well in some environments, such as environments without a clear view of the sky. Multipath propagation of the satellite radio signals can also induce large errors in the estimated vehicle position, which then translates into errors in the estimated vehicle speed over ground.

Vision-based sensor systems and radar systems can also be used to determine vehicle speed over ground. However, such systems are relatively costly and not always without issues when it comes to accuracy and reliability. Vision-based sensor may for instance suffer from performance degradation due to sun glare while radar sensor systems may be prone to interference from other radar transceivers.

Predictor antennas is a technique which was developed for more efficient radio communication between a moving vehicle and, e.g., an access point in a cellular system, such as an access system defined by the third generation partnership program (3GPP), i.e., a 4G, 5G, or 6G cellular access network. A predictor antenna system comprises at least two antenna elements separated by a distance in the longitudinal direction of the vehicle, i.e., along the forward direction of the vehicle. The idea behind predictor antennas is that a first antenna is used to receive a radio signal, which the system uses to estimate the characteristics of the radio propagation channel between transmitter and receiver. This channel estimate will then become outdated since the vehicle will have moved too far away from the location where the estimate is relevant to be used for communication. However, a second antenna then passes more or less the exact same location as the first antenna element (since the two antennas are deployed separated in the longitudinal direction of the vehicle), and the estimated channel data obtained from the first antenna element can then be reused at the second antenna element. Predictor antennas are generally known, see, e.g., "Predictor Antennas in Action" by J. Björsell, M. Sternad and M. Grieger, IEEE Personal Indoor and Mobile Radio Communications, PIMRC'17, Montreal, Canada, October 2017, and the references cited therein. Predictor antennas are also discussed by Guo, H., Makki, B., Phan Huy, D. et al in "Predictor Antenna: A Technique to Boost the Performance of Moving Relays", IEEE Communications Magazine, 59(7): 80-86, 2021.

As a side-effect of the channel estimation, the vehicle speed over ground can be determined by correlating the received radio signals against each other. The velocity of the vehicle (in the direction of antenna separation) can be estimated from the peak of the correlation function between two received radio signals at two antenna elements. In other words, if the correlation $C(\tau)$ at delay $\tau$ between the radio signals $y_m$ and $y_p$ received at an antenna m and an antenna p is

$$C(\tau) = E\big[y_m(t)y_p{}^{*}(t - \tau)\big]$$

where $y_p{}^{*}$ denotes complex conjugate of signal $y_p$, and maximum correlation occurs at $\tau = \tau_{max}$, then the vehicle speed $v$ in the direction of antenna separation can be determined as

$$v = D/\tau_{max}$$

where D is the antenna separation.

It has been realized that this side-effect of a predictor antenna system can be used to make wheel slip control of a heavy-duty vehicle more reliable and efficient, since the vehicle speed over ground can be determined in this manner. Further, not only the longitudinal speed $v_x$ of a wheel can be determined, but also the lateral speed $v_y$, something which is notoriously difficult to do using, e.g., wheel speed sensors.

The width of the correlation peak, i.e., a measure of its sharpness or curvature of $C(\tau)$ at $\tau = \tau_{max}$, can be used to determine an accuracy of the estimated speed over ground. A relatively sharp peak (large curvature at $\tau = \tau_{max}$) is indicative of a high accuracy while a less pronounced peak of smaller curvature is indicative of a larger variance in the estimated speed over ground, i.e., less reliable estimated speed over ground. This estimated variance can be used in the control of the heavy-duty vehicle, which is an advantage.

Figure 3 schematically illustrates functionality 300 for controlling an example wheel 310 on the vehicle 100 by some example MSDs here comprising a friction brake 320 (such as a disc brake or a drum brake), a propulsion device 340 and a power steering arrangement 330. The friction brake 320 and the propulsion device are examples of wheel torque generating devices, which can be controlled by one or more motion support device control units 330. The control is based on, e.g., measurement data obtained from a wheel speed sensor 350 and from other vehicle state sensors, such as radar sensors, lidar sensors, and also vision based sensors such as camera sensors and infra-red detectors. An MSD control system 330 may be arranged to control one or more actuators. For instance, it is not uncommon that an MSD control system 330 is arranged to control both wheels on an axle.

The TSM function 370 plans driving operation with a time horizon of 10 seconds or so. This time frame corresponds to, e.g., the time it takes for the vehicle 100 to negotiate a curve or the like. The vehicle maneuvers, planned and executed by the TSM function, can be associated with acceleration profiles and curvature profiles which describe a desired target vehicle velocity in the vehicle forward direction and turning to be maintained for a given maneuver. The TSM function continuously requests the desired acceleration profiles $a_{req}$ and steering angles (or curvature profiles $c_{req}$) from the VMM function 360 which performs force allocation to meet the requests from the TSM function in a safe and robust manner. The VMM function 360 operates on a timescale of below one second or so and will be discussed in more detail below.

The wheel 310 has a longitudinal velocity component $v_x$ and a lateral velocity component $v_y$ (in the coordinate system of the wheel or in the coordinate system of the vehicle, depending on implementation). There is a longitudinal wheel force $F_x$ and a lateral wheel force $F_y$, and also a normal force $F_z$ acting on the wheel (not shown in Figure 3). Unless explicitly stated otherwise, the wheel forces are defined in the coordinate system of the wheel, i.e., the longitudinal force is directed in the rolling plane of the wheel, while the lateral wheel force is directed normal to the rolling plane of the wheel. The wheel has a rotational velocity $\omega_x$, and a radius R.

A vehicle speed sensor 380 based on at least two separated predictor antenna elements is used to determine vehicle speed over ground, which can then be translated into wheel speed components $v_x$ and/or $v_y$, in the coordinate system of the wheel. This means that the wheel steering angle $\delta$ is taken into account if the wheel is a steered wheel, while a non-steered wheel has a longitudinal velocity component which is the same as the vehicle unit to which the wheel is attached.

The type of inverse tyre models exemplified by the graph 200 in Figure 2 can be used by the VMM 360 to generate a desired tyre force at some wheel. Instead of requesting a torque corresponding to the desired tyre force, the VMM can translate the desired tyre force into an equivalent wheel slip (or, equivalently, a wheel speed relative to a speed over ground) and request this slip instead. The main advantage being that the MSD control device 330 will be able to deliver the requested torque with much higher bandwidth by maintaining operation at the desired wheel slip, using the vehicle speed $v_x$ from the vehicle speed sensor 380 and the wheel rotational velocity $\omega_x$, obtained from the wheel speed sensor 350.

The control unit or units can be arranged to store one or more pre-determined inverse tyre models in memory, e.g., as look-up tables or parameterized functions. An inverse tyre model can also be arranged to be stored in the memory as a function of the current operating condition of the wheel 310.

Figures 4A and 4B show example predictor antenna arrangements adapted for determining vehicle speed over ground in a heavy-duty vehicle 100.

The system 400 in Figure 4A comprises two antenna elements 420, 421 connected to a first processing unit 410 which is arranged to receive a radio signal 405 via the antenna elements, to correlate the received radio signals against each other and to determine a speed over ground of the vehicle 100 based on the correlation of the received radio signals as discussed above. The antenna elements are separated by a distance D in the longitudinal direction of the vehicle and can therefore determine vehicle longitudinal speed over ground, i.e., $v_x$. This longitudinal speed over ground can then be translated into a wheel speed over ground by straight forward operations.

The example system 430 in Figure 4B comprises an antenna array, i.e., a collection of three or more antenna elements, which extends in two directions, i.e., the antenna array has an extension D1, D2 in both the vehicle longitudinal direction and also in the lateral direction of the vehicle 100. Since the antenna elements are separated also in the lateral direction of the vehicle, it becomes possible to also determine vehicle lateral speed over ground $v_y$, which as noted above can be notoriously difficult using traditional wheel speed sensors. The antenna array in Figure 4B comprises four antenna elements 440, 441, 442, 443 arranged in square configuration. It is, however, noted that the antenna elements in an array having two-dimensional extension in a horizontal plane may comprise any number of antennas from three antenna elements and upwards. For instance, a large scale 5G cellular access advanced antenna system can be used with advantage to determine vehicle speed in two dimension in this manner. This is an advantage since the vehicle may comprise the advanced antenna system anyway for pure communication purposes involving, e.g., beamforming techniques and the like.

To summarize the discussions so far, there has been disclosed a system 380, 400, 430 for determining a wheel slip $\lambda$ of a wheel 310 on a heavy-duty vehicle 100. The system comprises at least two antenna elements 420, 421, 440, 441, 442, 443 separated by a distance D, D1, D2. The system also comprises a first processing unit 410 arranged to receive a radio signal via the at least two antenna elements, to correlate the received radio signals against each other and to determine a speed over ground of the vehicle 100 based on the correlation of the received radio signals. Thus, the first processing unit is essentially a predictor antenna processing unit as previously known, but now adapted for the new purpose of wheel slip control of a heavy-duty vehicle 100. The system also comprises a wheel speed sensor 350 arranged to determine a rotational velocity $\omega_x$ of the wheel 310, and a second processing unit 330, 360 arranged to determine the wheel slip $\lambda$ of the wheel 310 based on the rotational velocity $\omega_x$ of the wheel 310 and on the speed over ground of the vehicle 100. It is noted that the first and the second processing unit may be integrated into the same processing platform, or may be realized on separate processing platforms. Some example hardware realizations of the first and the second processing units will be discussed below in connection to Figure 8.

The at least two antenna elements 420, 421, 440, 441, 442, 443 can be separated by a distance D, D1 in a longitudinal direction of the vehicle 100, in which case the vehicle longitudinal speed over ground $v_x$ can be determined and consequently also a longitudinal wheel slip value of the wheel 310. However, it has been realized that the antennas can also be separated by a distance D2 in a lateral direction of the vehicle 100, i.e., with an angle relative to the forward direction of the vehicle. This means that lateral vehicle velocity over ground $v_y$ can also be determined, and consequently also lateral wheel slip and sideslip angle $\alpha$.

The first processing unit 410 is optionally arranged to receive a 3GPP radio signal, such as a fourth generation (4G), fifth generation (5G) and/or a sixth generation (6G) cellular access radio signal. This is an advantage since the type of advanced antenna systems often used in connection to these access networks may already be in place on the heavy-duty vehicle 100 for pure communication purposes. Thus, an existing antenna array may be possible to re-use or re-purpose for also determining vehicle speed over ground in a manner which is both robust and reliable. Of course, any radio signal can be used for this purpose. It is, for instance, also possible to use a Wi-Fi radio signal comprised in the family of wireless network protocols based on the **IEEE** 802.11 family of standards, and/or a proprietary beacon radio signal generated by one or more radio transmitters deployed for vehicle positioning, or even for the sole purpose of determining wheel slip.

According to some aspects, the at least two antenna elements 440, 441, 442, 443 separated by the distance are comprised in a two-dimensional antenna array extending in a horizontal plane. As mentioned above, this antenna array can form part of an existing advanced antenna system used for communicating with an access point in a cellular access network. The at least two antenna elements 440, 441, 442, 443 separated by the distance are preferably arranged to be mounted on a cab roof of the heavy-duty vehicle 100, where there is less interference from reflections in the near field of the antenna elements. The at least two antenna elements 440, 441, 442, 443 can for instance be integrated with a roof hatch of a cab of the heavy-duty vehicle 100.

According to some aspects, the first and/or the second processing unit 330 is also arranged to determine a curvature of the correlation function between the signals received at the antenna elements, and to determine a measure of error based on the curvature of the correlation function about its peak value.

The predictor antenna system can of course also be used to determine vehicle speed over ground without also determining wheel slip. Hence, there is also disclosed herein a system 380, 400, 430, 600 for determining a lateral speed over ground $v_y$ of a heavy-duty vehicle 100. The system comprises at least two antenna elements 420, 421, 440, 441, 442, 443 separated by a distance D2 in the lateral direction, and a first processing unit 410 arranged to receive a radio signal via the at least two antenna elements, to correlate the received radio signals against each other and to determine the lateral speed over ground of the vehicle 100 based on the correlation of the received radio signals. This is made possible by the lateral separation of the antenna elements.

Figure 5 illustrates an example vehicle control function architecture applicable with the herein disclosed methods, where the TSM function 370 generates vehicle motion requests 375, which may comprise a desired steering angle $\delta$ or an equivalent curvature $c_{req}$ to be followed by the vehicle, and which may also comprise desired vehicle unit accelerations areq and also other types of vehicle motion requests, which together describe a desired motion by the vehicle along a desired path at a desired velocity profile. It is understood that the motion requests can be used as base for determining or predicting a required amount of longitudinal and lateral forces which needs to be generated in order to successfully complete a maneuver.

The VMM function 360 operates with a time horizon of about 1 second or so, and continuously transforms the acceleration profiles $a_{req}$ and curvature profiles $c_{req}$ from the TSM function into control commands for controlling vehicle motion functions, actuated by the different MSDs of the vehicle 100 which report back capabilities to the VMM, which in turn are used as constraints in the vehicle control. The VMM function 360 performs vehicle state or motion estimation 510, i.e., the VMM function 360 continuously determines a vehicle state s comprising positions, speeds, accelerations, and articulation angles of the different units in the vehicle combination by monitoring operations using various sensors 550 arranged on the vehicle 100, often but not always in connection to the MSDs. An important input to the motion estimation 510 may of course be the signals from the vehicle speed sensor 380 and the wheel speed sensors 350 on the heavy duty vehicle 100, where the vehicle speed sensor 380 may comprise one or more predictor antenna systems.

The result of the motion estimation 510, i.e., the estimated vehicle state s, is input to a force generation module 520 which determines the required global forces $V=[V_1, V_2]$ for the different vehicle units to cause the vehicle 100 to move according to the requested acceleration and curvature profiles $a_{req}$, $c_{req}$, and to behave according to the desired vehicle behavior. The required global force vector V is input to an MSD coordination function 530 which allocates wheel forces and coordinates other MSDs such as steering and suspension. The MSD coordination function outputs an MSD control allocation for the i:th wheel, which may comprise any of a torque $T_i$, a longitudinal wheel slip $\lambda_i$, a wheel rotational speed $\omega_i$, and/or a wheel steering angle $\delta_i$. The coordinated MSDs then together provide the desired lateral Fy and longitudinal Fx forces on the vehicle units, as well as the required moments Mz, to obtain the desired motion by the vehicle combination 100.

The MSD control units may obtain wheel speed from one or more wheel speed sensors 350, and also a reliable vehicle speed over ground 380 from the predictor antenna arrangements discussed above. One or more controllers may be connected to the predictor antenna arrangement.

Thus, according to some aspects of the present disclosure, the VMM function 360 manages both force generation and MSD coordination, i.e., it determines what forces that are required at the vehicle units in order to fulfil the requests from the TSM function 370, for instance to accelerate the vehicle according to a requested acceleration profile requested by TSM and/or to generate a certain curvature motion by the vehicle also requested by TSM. The forces may comprise e.g., yaw moments Mz, longitudinal forces Fx and lateral forces Fy, as well as different types of torques to be applied at different wheels. The forces are determined such as to generate the vehicle behavior which is expected by the TSM function in response to the control inputs generated by the TSM function 370.

Figure 6 illustrates an example heavy-duty vehicle 100 with a towing truck configured to tow a trailer unit in a known manner. The vehicle 100 comprises a system 600 of predictor antennas. The system comprises a plurality of groups 610, 620, 630 of at least two antenna elements each, where the groups are distributed over the heavy-duty vehicle 100. This enables the second processing unit 330, 360 to determine relative vehicle motion of the different parts of the vehicle, and also a rotation, such as a yaw motion $v\omega$. In other words, the second processing unit 330, 360 may be arranged to determine a yaw motion of the vehicle 100 based on the speed over ground of the vehicle 100 at the groups 610, 620, 630 of at least two antenna elements.

Figure 7 is a flow chart illustrating a method which summarizes some of the key concepts discussed above. There is illustrated a computer implemented method for determining a wheel slip I of a wheel 310 on a heavy-duty vehicle 100. The method comprises configuring S1 at least two antenna elements 420, 421, 440, 441, 442, 443 separated by a distance D, D1, D2, receiving S2, by a first processing unit 410, a radio signal via the at least two antenna elements, correlating S3 the received radio signals against each other, and determining S4 a speed over ground of the vehicle 100 based on the correlation of the received radio signals. The method also comprises configuring S5 a wheel speed sensor 350 arranged to determine a rotational velocity $\omega_x$ of the wheel 310, and determining S6, by a second processing unit 330, 360, the wheel slip $\lambda$ of the wheel 310 based on the rotational velocity $\omega_x$ of the wheel 310 and on the speed over ground of the vehicle 100.

Figure 8 schematically illustrates, in terms of a number of functional units, the components of a control unit 800 according to embodiments of the discussions herein, such as any of the MSD control system 330 or the VMM system 360. Processing circuitry 810 is provided using any combination of one or more of a suitable central processing unit CPU, multiprocessor, microcontroller, digital signal processor DSP, etc., capable of executing software instructions stored in a computer program product, e.g., in the form of a storage medium 830. The processing circuitry 810 may further be provided as at least one application specific integrated circuit ASIC, or field programmable gate array FPGA. Particularly, the processing circuitry 810 is configured to cause the control unit 800 to perform a set of operations, or steps, such as the methods discussed in connection to Figure 7 and generally herein. For example, the storage medium 830 may store the set of operations, and the processing circuitry 810 may be configured to retrieve the set of operations from the storage medium 830 to cause the control unit 800 to perform the set of operations. The set of operations may be provided as a set of executable instructions. Thus, the processing circuitry 810 is thereby arranged to execute methods as herein disclosed.

The storage medium 830 may also comprise persistent storage, which, for example, can be any single one or combination of magnetic memory, optical memory, solid state memory or even remotely mounted memory.

The control unit 800 may further comprise an interface 820 for communications with at least one external device. As such the interface 820 may comprise one or more transmitters and receivers, comprising analogue and digital components and a suitable number of ports for wireline or wireless communication.

The processing circuitry 810 controls the general operation of the control unit 800, e.g., by sending data and control signals to the interface 820 and the storage medium 830, by receiving data and reports from the interface 820, and by retrieving data and instructions from the storage medium 830. Other components, as well as the related functionality, of the control node are omitted in order not to obscure the concepts presented herein.

Figure 9 illustrates a computer readable medium 910 carrying a computer program comprising program code means 920 for performing the methods illustrated in Figure 7 and the techniques discussed herein, when said program product is run on a computer. The computer readable medium and the code means may together form a computer program product 900.

**Claims**

1. A system (380, 400, 430, 600) for determining a wheel slip ($\lambda$) of a wheel (310) on a heavy-duty vehicle (100), the system comprising

    at least two antenna elements (420, 421, 440, 441, 442, 443) separated by a distance (D, D1, D2), the system being **characterized by**
    a first processing unit (410) arranged to receive a radio signal (405) via the at least two antenna elements, to correlate the received radio signal from the antenna elements against each other and to determine a speed over ground of the vehicle (100) based on the correlation of the received radio signal at the antenna elements, the system further comprising
    a wheel speed sensor (350) arranged to determine a rotational velocity ($\omega_x$) of the wheel (310), and
    a second processing unit (330, 360) arranged to determine the wheel slip ($\lambda$) of the wheel (310) based on the rotational velocity ($\omega_x$) of the wheel (310) and on the speed over ground of the vehicle (100).

2. The system (380, 400, 430, 600) according to claim 1, wherein the at least two antenna elements (420, 421, 440, 441, 442, 443) are separated by a distance (D, D1) in a longitudinal direction of the vehicle (100), where the wheel slip ($\lambda$) of the wheel (310) comprises a longitudinal wheel slip value.

3. The system (380, 400, 430, 600) according to claim 1 or 2, wherein the at least two antenna elements (440, 441, 442, 443) are separated by a distance (D2) in a lateral direction of the vehicle (100), where the wheel slip ($\lambda$) of the wheel (310) comprises a lateral wheel slip value.

4. The system (600) according to any previous claim, comprising a plurality of groups (610, 620, 630) of at least two antenna elements each, where the groups are distributed over the heavy-duty vehicle (100).

5. The system (600) according to claim 4, where the second processing unit (330, 360) is arranged to determine a yaw motion of the vehicle (100) based on the speed over ground of the vehicle (100) at the groups (610, 620, 630) of at least two antenna elements.

6. The system (380, 400, 430, 600) according to any previous claim, where the first processing unit (410) is arranged to receive a third generation partnership program, 3GPP, radio signal, such as a fourth, 4G, fifth, 5G, or sixth, 6G, generation cellular access radio signal.

7. The system (380, 400, 430, 600) according to any previous claim, where the first processing unit (410) is arranged to receive a Wi-Fi radio signal comprised in the family of wireless network protocols based on the IEEE 802.11 family of standards.

8. The system (380, 400, 430, 600) according to any previous claim, where the first processing unit (410) is arranged to receive a proprietary beacon radio signal.

9. The system (380, 400, 430, 600) according to any previous claim, where the at least two antenna elements (440, 441, 442, 443) separated by the distance are comprised in a two-dimensional antenna array extending in a horizontal plane.

10. The system (380, 400, 430, 600) according to any previous claim, where the at least two antenna elements (440, 441, 442, 443) separated by the distance are arranged to be mounted on a cab roof of the heavy-duty vehicle (100).

11. The system (380, 400, 430, 600) according to any previous claim, where the first processing unit (410) and/or the second processing unit (330, 360) is arranged to determine an accuracy of the speed over ground of the vehicle (100) based on a measure of curvature of a correlation function of the received radio signal from the antenna elements.

12. A heavy-duty vehicle (100) comprising the system (380, 400, 430, 600) according to any previous claim.

13. A computer implemented method for determining a wheel slip ($\lambda$) of a wheel (310) on a heavy-duty vehicle (100), the vehicle comprising at least two antenna elements (420, 421, 440, 441, 442, 443) separated by a distance (D, D1, D2), the vehicle also comprising a wheel speed sensor (350) arranged to determine a rotational velocity ($\omega_x$) of the wheel (310), the method comprising receiving (S2), by a first processing unit (410), a radio signal via the at least two antenna elements,

 correlating (S3) the received radio signals against each other, and determining (S4) a speed over ground of the vehicle (100) based on the correlation of the received radio signals, and
 determining (S6), by a second processing unit (330, 360), the wheel slip ($\lambda$) of the wheel (310) based on the rotational velocity ($\omega_x$) of the wheel (310) and on the speed over ground of the vehicle (100).

14. A computer program comprising program code means for performing the steps of claim 13 when the program is run on a computer system comprising a first processing unit and a second processing unit.

15. A system (380, 400, 430, 600) for determining a lateral speed over ground (vy) of a heavy-duty vehicle (100), the system comprising

 at least two antenna elements (420, 421, 440, 441, 442, 443) separated by a distance (D2) in the lateral direction,
 the system being **characterized by** a first processing unit (410) arranged to receive a radio signal via the at least two antenna elements, to correlate the received radio signals against each other and to determine the lateral speed over ground of the vehicle (100) based on the correlation of the received radio signals.

## Patentansprüche

1. System (380, 400, 430, 600) zum Bestimmen eines Radschlupfes ($\lambda$) eines Rades (310) an einem Schwerlastfahrzeug (100), wobei das System Folgendes umfasst:

 mindestens zwei Antennenelemente (420, 421, 440, 441, 442, 443), die durch einen Abstand (D, D1, D2) getrennt sind, wobei das System **gekennzeichnet ist durch**
 eine erste Verarbeitungseinheit (410), die so ausgelegt ist, dass sie ein Funksignal (405) über die mindestens zwei Antennenelemente empfängt, um das von den Antennenelementen empfangene Funksignal miteinander zu korrelieren und eine Geschwindigkeit des Fahrzeugs (100) über Grund auf der Grundlage der Korrelation des an den Antennenelementen empfangenen Funksignals zu bestimmen,
 wobei das System ferner Folgendes umfasst
 einen Raddrehzahlsensor (350), der so ausgelegt ist, dass er eine Drehgeschwindigkeit ($\omega_\chi$) des Rades (310) bestimmt, und
 eine zweite Verarbeitungseinheit (330, 360), die so ausgelegt ist, dass sie den Radschlupf ($\lambda$) des Rades (310) auf der Grundlage der Drehgeschwindigkeit ($\omega_\chi$) des Rades (310) und der Geschwindigkeit des Fahrzeugs (100) über Grund bestimmt.

2. System (380, 400, 430, 600) nach Anspruch 1, wobei die mindestens zwei Antennenelemente (420, 421, 440, 441, 442, 443) in einer Längsrichtung des Fahrzeugs (100) um einen Abstand (D, D1) voneinander getrennt sind, wobei der Radschlupf ($\lambda$) des Rades (310) einen longitudinaler Radschlupfwert umfasst.

3. System (380, 400, 430, 600) nach Anspruch 1 oder 2, wobei die mindestens zwei Antennenelemente (440, 441, 442, 443) durch einen Abstand (D2) in einer seitlichen Richtung des Fahrzeugs (100) getrennt sind, wobei der Radschlupf ($\lambda$) des Rades (310) einen seitlichen Radschlupfwert umfasst.

4. System (600) nach einem der vorhergehenden Ansprüche, umfassend eine Vielzahl von Gruppen (610, 620, 630) mit jeweils mindestens zwei Antennenelementen, wobei die Gruppen über das Schwerlastfahrzeug (100) verteilt sind.

5. System (600) nach Anspruch 4, wobei die zweite Verarbeitungseinheit (330, 360) so ausgelegt ist, dass sie eine Gierbewegung des Fahrzeugs (100) auf der Grundlage der Geschwindigkeit des Fahrzeugs (100) über Grund an den Gruppen (610, 620, 630) von mindestens zwei Antennenelementen bestimmt.

6. System (380, 400, 430, 600) nach einem der vorhergehenden Ansprüche, wobei die erste Verarbeitungseinheit (410) so ausgelegt ist, dass sie ein Funksignal eines Partnerschaftsprogramms der dritten Generation (3GPP) empfängt, beispielsweise ein Mobilfunkzugangs-Funksignal der vierten Generation (4G), der fünften Generation (5G) oder der sechsten Generation (6G).

7. System (380, 400, 430, 600) nach einem der vorhergehenden Ansprüche, wobei die erste Verarbeitungseinheit (410) so ausgelegt ist, dass sie ein Wi-Fi-Funksignal empfängt, das zur Familie der drahtlosen Netzwerkprotokolle gehört, die auf der IEEE 802.11-Standardfamilie basieren.

8. System (380, 400, 430, 600) nach einem der vorhergehenden Ansprüche, wobei die erste Verarbeitungseinheit (410) so ausgelegt ist, dass sie ein proprietäres Funkbaken-Funksignal empfängt.

9. System (380, 400, 430, 600) nach einem der vorhergehenden Ansprüche, wobei die mindestens zwei Antennenelemente (440, 441, 442, 443), die durch den Abstand voneinander getrennt sind, in einer zweidimensionalen Antennenanordnung enthalten sind, die sich in einer horizontalen Ebene erstreckt.

10. System (380, 400, 430, 600) nach einem der vorhergehenden Ansprüche, wobei die mindestens zwei Antennenelemente (440, 441, 442, 443), die durch den Abstand voneinander getrennt sind, so ausgelegt sind, dass sie auf einem Kabinendach des Schwerlastfahrzeugs (100) montiert werden können.

11. System (380, 400, 430, 600) nach einem der vorhergehenden Ansprüche, wobei die erste Verarbeitungseinheit (410) und/oder die zweite Verarbeitungseinheit (330, 360) so ausgelegt ist, dass sie eine Genauigkeit der Geschwindigkeit des Fahrzeugs (100) über Grund auf der Grundlage eines Krümmungsmaßes einer Korrelationsfunktion des empfangenen Funksignals von den Antennenelementen bestimmt.

12. Schwerlastfahrzeug (100), umfassend das System (380, 400, 430, 600) nach einem der vorherigen Ansprüche.

13. Computerimplementiertes Verfahren zum Bestimmen eines Radschlupfes ($\lambda$) eines Rades (310) an einem Schwerlastfahrzeug (100), wobei das Fahrzeug mindestens zwei Antennenelemente (420, 421, 440, 441, 442, 443) umfasst, die durch einen Abstand (D, D1, D2) getrennt sind, wobei das Fahrzeug auch einen Radgeschwindigkeitssensor (350) umfasst, der so ausgelegt ist, dass er eine Drehgeschwindigkeit ($\omega_\chi$) des Rades (310) bestimmt, wobei das Verfahren das Empfangen (S2) eines Funksignals über die mindestens zwei Antennenelemente durch eine erste Verarbeitungseinheit (410),

   Korrelieren (S3) der empfangenen Funksignale untereinander, und
   Bestimmen (S4) einer Geschwindigkeit des Fahrzeugs (100) über Grund auf der Grundlage der Korrelation der empfangenen Funksignale, und
   Bestimmen (S6) des Radschlupfes ($\lambda$) des Rades (310) durch eine zweite Verarbeitungseinheit (330, 360) auf der Grundlage der Drehgeschwindigkeit ($\omega_\chi$) des Rades (310) und der Geschwindigkeit des Fahrzeugs (100) über Grund umfasst.

14. Computerprogramm, umfassend Programmcodemittel zum Ausführen der Schritte nach Anspruch 13, wenn das Programm auf einem Computersystem mit einer ersten Verarbeitungseinheit und einer zweiten Verarbeitungseinheit ausgeführt wird.

15. System (380, 400, 430, 600) zum Bestimmen einer seitlichen Geschwindigkeit über Grund (vy) eines Schwerlastfahrzeugs (100), das System umfassend

   mindestens zwei Antennenelemente (420, 421, 440, 441, 442, 443), die in seitlicher Richtung einen Abstand (D2) voneinander haben,
   wobei das System **gekennzeichnet ist durch** eine erste Verarbeitungseinheit (410), die so ausgelegt ist, dass sie ein Funksignal über die mindestens
   zwei Antennenelementen empfängt, um die empfangenen Funksignale miteinander zu korrelieren und die seitliche Geschwindigkeit des Fahrzeugs (100) über Grund auf der Grundlage der Korrelation der empfangenen Funksignale zu bestimmen.

**Revendications**

1. Système (380, 400, 430, 600) permettant de déterminer le patinage ($\lambda$) d'une roue (310) d'un véhicule utilitaire lourd (100), le système comprenant

   au moins deux éléments d'antenne (420, 421, 440, 441, 442, 443) séparés par une distance (D, D1, D2), le système étant **caractérisé par** une première unité de traitement (410) agencée de façon à recevoir un signal radio (405) via les au moins deux éléments d'antenne, à corréler le signal radio reçu des éléments d'antenne les uns par rapport aux autres et à déterminer une vitesse au sol du véhicule (100) sur la base de la corrélation du signal radio reçu au niveau des éléments d'antenne,

le système comprenant en outre

un capteur de vitesse de roue (350) agencé de façon à déterminer une vitesse de rotation ($\omega_\chi$) de la roue (310), et

une seconde unité de traitement (330, 360) agencée de façon à déterminer le patinage ($\lambda$) de la roue (310) sur la base de la vitesse de rotation ($\omega_\chi$) de la roue (310) et de la vitesse au sol du véhicule (100).

2. Système (380, 400, 430, 600) selon la revendication 1, dans lequel les au moins deux éléments d'antenne (420, 421, 440, 441, 442, 443) sont séparés par une distance (D, D1) dans une direction longitudinale du véhicule (100), dans lequel le patinage ($\lambda$) de la roue (310) comprend une valeur de patinage de roue longitudinal.

3. Système (380, 400, 430, 600) selon la revendication 1 ou 2, dans lequel les au moins deux éléments d'antenne (440, 441, 442, 443) sont séparés par une distance (D2) dans une direction latérale du véhicule (100), dans lequel le patinage ($\lambda$) de la roue (310) comprend une valeur de patinage de roue latéral.

4. Système (600) selon l'une quelconque des revendications précédentes, comprenant une pluralité de groupes (610, 620, 630) d'au moins deux éléments d'antenne chacun, les groupes étant répartis sur le véhicule utilitaire lourd (100).

5. Système (600) selon la revendication 4, dans lequel la seconde unité de traitement (330, 360) est agencée de façon à déterminer un mouvement de lacet du véhicule (100) sur la base de la vitesse au sol du véhicule (100) aux groupes (610, 620, 630) d'au moins deux éléments d'antenne.

6. Système (380, 400, 430, 600) selon l'une quelconque des revendications précédentes, dans lequel la première unité de traitement (410) est agencée de façon à recevoir un signal radio du programme de partenariat de troisième génération, 3GPP, tel qu'un signal radio d'accès cellulaire de quatrième, 4G, cinquième, 5G, ou sixième, 6G, génération.

7. Système (380, 400, 430, 600) selon l'une quelconque des revendications précédentes, dans lequel la première unité de traitement (410) est agencée de façon à recevoir un signal radio Wi-Fi appartenant à la famille des protocoles de réseaux sans fil basés sur la famille de normes IEEE 802.11.

8. Système (380, 400, 430, 600) selon l'une quelconque des revendications précédentes, dans lequel la première unité de traitement (410) est agencée de façon à recevoir un signal radio de balise propriétaire.

9. Système (380, 400, 430, 600) selon l'une quelconque des revendications précédentes, dans lequel les au moins deux éléments d'antenne (440, 441, 442, 443) séparés par la distance sont compris dans un réseau d'antennes bidimensionnel s'étendant dans un plan horizontal.

10. Système (380, 400, 430, 600) selon l'une quelconque des revendications précédentes, dans lequel les au moins deux éléments d'antenne (440, 441, 442, 443) séparés par la distance sont agencés de façon à être montés sur le toit de la cabine du véhicule utilitaire lourd (100).

11. Système (380, 400, 430, 600) selon l'une quelconque des revendications précédentes, dans lequel la première unité de traitement (410) et/ou la deuxième unité de traitement (330, 360) est agencée de façon à déterminer une précision de la vitesse au sol du véhicule (100) sur la base d'une mesure de la courbure d'une fonction de corrélation du signal radio reçu des éléments d'antenne.

12. Véhicule utilitaire lourd (100) comprenant le système (380, 400, 430, 600) selon l'une quelconque des revendications précédentes.

13. Procédé mis en œuvre par ordinateur pour déterminer le patinage ($\lambda$) d'une roue (310) sur un véhicule utilitaire lourd (100), le véhicule comprenant au moins deux éléments d'antenne (420, 421, 440, 441, 442, 443) séparés par une distance (D, D1, D2), le véhicule comprenant également un capteur de vitesse de roue (350) agencé de façon à déterminer une vitesse de rotation ($\omega_\chi$) de la roue (310), le procédé comprenant

la réception (S2), par une première unité de traitement (410), d'un signal radio par l'intermédiaire des au moins deux éléments d'antenne, la corrélation (S3) des signaux radio reçus les uns par rapport aux autres, et la détermination (S4) de la vitesse au sol du véhicule (100) sur la base de la corrélation des signaux radio reçus, et

la détermination (S6), par une seconde unité de traitement (330, 360), du patinage ($\lambda$) de la roue (310) en fonction de la vitesse de rotation ($\omega_\chi$) de la roue (310) et de la vitesse au sol du véhicule (100).

14. Programme informatique comprenant des moyens de code de programme pour effectuer les étapes selon la revendication 13 lorsque le programme est exécuté sur un système informatique comprenant une première unité de traitement et une seconde unité de traitement.

15. Système (380, 400, 430, 600) permettant de déterminer une vitesse latérale au sol (vy) d'un véhicule utilitaire lourd (100), le système comprenant

au moins deux éléments d'antenne (420, 421, 440, 441, 442, 443) séparés par une distance (D2) dans la direction latérale,
le système étant **caractérisé par**
une première unité de traitement (410) agencée de façon à recevoir un signal radio par l'intermédiaire de deux éléments d'antenne, à corréler les signaux radio reçus entre eux et à déterminer la vitesse latérale du véhicule (100) sur la base de la corrélation des signaux radio reçus.

FIG. 1

FIG. 2

FIG. 3

FIG. 4A

FIG. 4B

FIG. 5

FIG. 6

FIG. 7

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017215751 A
- WO 2021144010 A
- DE 102004029002 A1
- JP 2003231460 A

**Non-patent literature cited in the description**

- **THOMAS GILLESPIE**. Fundamentals of Vehicle Dynamics. Society of Automotive Engineers, 1992
- **HANS PACEJKA**. Tyre and vehicle dynamics. Elsevier Ltd., 2012
- **J. BJÖRSELL** ; **M. STERNAD** ; **M. GRIEGER**. Predictor Antennas in Action. *IEEE Personal Indoor and Mobile Radio Communications, PIMRC'17, Montreal, Canada*, October 2017
- **GUO, H.** ; **MAKKI, B.** ; **PHAN HUY, D. et al.** Predictor Antenna: A Technique to Boost the Performance of Moving Relays. *IEEE Communications Magazine*, 2021, vol. 59 (7), 80-86